# DEMANDE DE BREVET EUROPEEN

(11) **EP 3 944 771 A2**
(43) Date de publication de la demande: **02.02.2022**
(21) Numéro de dépôt: 21188662.7
(22) Date de dépôt: 30.07.2021
(51) Int. Cl.: A23L 9/20, A23D 7/005

(54) **CREAM CHEESE**

(30) Priorité: 31.07.2020 FR 2008200
(71) Demandeur: SAVENCIA SA, 78220 Viroflay (FR)
(72) Inventeur: DURAND, Fabien, 24430 Razac sur L'Isle (FR); PADEL, Virginie, 28170 FAVIERES (FR); CIBRARIO, Alice, 78000 Versailles (FR)
(74) Mandataire: Gevers & Orès

(57) **Abrégé**

La présente invention se rapporte à un Cream Cheese végétal, c'est-à-dire à un produit formulé avec des matières premières végétales reproduisant les caractéristiques d'un Cream Cheese laitier sur le plan de la texture et du profil organoleptique.

## Description

La présente invention se rapporte au domaine de l'industrie alimentaire ; elle vise plus particulièrement la préparation de produits alimentaires composés d'ingrédients végétaux et présentant des propriétés organoleptiques proches de celles de produits laitiers.

Que ce soit par conviction éthique ou pour des raisons nutritionnelles, la demande en produits alimentaires végétariens voire végétaliens est en constante croissance. Il existe toutefois des produits alimentaires dont la fabrication requiert par définition l'utilisation d'ingrédients d'origine animale comme c'est le cas du lait de mammifère pour la préparation de produits laitiers comme le fromage.

La Demanderesse s'est donnée pour objectif la mise au point de produits alimentaires analogues à des produits laitiers à partir de matières premières végétales afin de générer des produits compatibles avec une alimentation végétalienne (« Vegan ») tout en restant dans l'univers organoleptique de produits laitiers de type fromage à tartiner ou Cream Cheese tant sur l'aspect, la texture ou encore le gout.

Les fromages sont une catégorie de produits laitiers frais obtenus à partir de lait liquide, milieu colloïdal composé de protéines de taille submicronique, de globules gras, sucres et sels minéraux. Le lait est potentiellement enrichi de crème ou d'autres dérivés laitiers puis soumis à un traitement thermique (thermisation ou pasteurisation) et/ou physique (microfiltration) afin d'être coagulé par voie enzymatique (présure) et/ou microbiologique (bactéries lactiques notamment). Le caillé est ensuite cassé mécaniquement, égoutté et/ou pressé puis éventuellement affiné pour produire une variété de fromages tels que pâtes molles, pâtes pressées, etc.... Les caillés peuvent également être mélangés avec d'autres ingrédients (protéines laitières, crème, épices, fines herbes, etc...) puis soumis à des traitements thermomécaniques (par exemple homogénéisation et pasteurisation) afin d'obtenir des spécialités fromagères, qui ont un goût fromager frais (ou de fromage frais), une couleur blanche, un aspect lisse et une texture tartinable.

Les analogues fromagers sont définis comme des produits obtenus en mélangeant différents ingrédients tels que des protéines et matières grasses, d'origine laitière ou non et formulés de manière à répondre à un besoin fonctionnel spécifique (Bachman, H.P., 2001, « Cheese analogues : a review », International Dairy Journal, Volume 11, 505-515). Historiquement, ces produits ont plutôt été formulés dans un objectif de réduction de coût, notamment avec les fromages à pizza. Plus récemment, le segment des analogues végétaux visant à reproduire les caractéristiques d'aspect et de goût des différents fromages a connu une forte expansion commerciale, et différents produits sont disponibles sur le marché avec des stratégies de formulation variées.

On connaît par exemple les Cream Cheeses végétaux obtenus en émulsionnant de la matière grasse dans une phase aqueuse contenant des amidons, comme par exemple les produits de marque Violife, Nature & Moi et Green Vie. Ces produits ont une faible teneur en protéines (entre 0 et 1%) et leur texturation est assurée par l'utilisation conjointe de matière grasse (fluide et/ou concrète), d'amidons (natifs et/ou modifiés) et d'hydrocolloïdes (xanthane, guar, caroube, gomme tara etc.). Des acides (lactique E270, citrique E330, sorbique E200) sont également utilisés.

D'une manière similaire, certains Cream Cheeses végétaux sont formés en émulsionnant de la matière grasse dans une phase continue contenant des protéines, par exemple des isolats de protéines de tournesol (Coop Yolo) ou de lupin (Made with LuveProlupin). La teneur en protéines est plus élevée (5-6%) et la texturation est assurée par l'utilisation de quantités importantes de matière grasse concrète (27% de coprah dans les deux cas). Des amidons ou des fibres végétales texturantes sont également ajoutés.

Les produits ci-dessus ont une texture lisse car basés sur l'utilisation de poudres de fine granulométrie qui sont hydratées puis émulsionnées avec de la matière grasse. Le coprah (ou huile de coco), matière grasse concrète riches en acides gras saturés est largement utilisé, ainsi que différents additifs tels que des hydrocolloïdes (amidons modifiés, xanthane, guar, caroube, tara) et des acides (sorbique, lactique, critique, malique). Ces produits ont une valeur nutritionnelle limitée et contiennent en général plusieurs additifs.

Un autre mode opératoire consiste à partir de graines entières, ayant subi en général un traitement de préparation (décorticage, optionnellement blanchiment, traitement thermique ou encore fermentation) et de les broyer : certains Cream Cheeses végétaux sont ainsi obtenus à partir de graines de soja (produits de marque Sojasun, Soyananda, Valsoia) et contiennent entre 2 et 4% de protéines et entre 20 et 31% de matières grasses, avec une majorité d'acides gras saturés (18 à 23%) et optionnellement des additifs texturants.

Un procédé similaire peut être utilisé avec des céréales telles que l'avoine (produits Oatly) ou le riz, transformées (par décorticage, traitement thermique et optionnellement germination) et broyées puis mélangées avec de la matière grasse, des texturants, de l'amidon et des acidifiants à statut additif. La teneur en matière grasse est de l'ordre de 20% avec des teneurs en acides gras saturés comprises entre 7 et 17%.

D'autres Cream Cheeses végétaux sont obtenus à partir de fruits à coque broyés, en particulier à partir de noix de cajou. Il est connu de mettre en œuvre des quantités importantes de noix de cajou broyées, d'ajouter de l'eau puis de fermenter la suspension par des bactéries lactiques. Les produits de la marque New Roots, Nuttin Ordinary, Spread'em Kitchen Co, Treeline ou Palace Culture correspondent à ce procédé d'obtention. Ces produits ont une teneur élevée en protéines (entre 6 et 14%) et en matière grasse (entre 23 et 32%) et ne contiennent pas d'additifs texturants ou acidifiants. La valeur calorique est élevée, le plus souvent entre 250 et 400 kcal/100g. La texture de ces produits est très souvent de farineuse à granuleuse, à la différence de celles des référents laitiers qui ont un aspect lisse sans particule détectable en bouche - à l'exception des particules d'herbes aromatiques ou d'ail qui sont volontairement visibles à l'œil nu.

Il est également connu de préparer des Cream Cheeses végétaux en partant d'un jus d'amandes, lui-même obtenu par un broyage poussé de l'amande afin d'obtenir une purée anhydre et lisse. Ce broyage poussé permet de passer de la structure de solide pulvérulent caractéristique de la poudre d'amande à une purée liquide de faible viscosité tout en restant anhydre. Une telle purée d'amandes ne comporte pas de particule détectable en bouche et permet donc de retrouver le caractère lisse des Cream Cheeses laitiers. Sa consistance est par contre trop fluide pour correspondre à l'utilisation d'un Cream Cheese, qui doit pouvoir être tartiné. Plusieurs solutions sont connues pour épaissir la purée d'amandes et lui donner la consistance d'un Cream Cheese laitier. Les produits de marque Kite Hill utilisent une combinaison d'additifs texturants (gomme xanthane, gomme guar et caroube) ainsi que de l'amidon de tapioca, afin d'obtenir la texture désirée. Les produits de marque Simply V utilisent une combinaison d'ajout de matière grasse concrète (coprah) et d'un additif texturant, la caroube. Le brevet US20180242622A1 (Hochland) décrit également l'utilisation d'un procédé spécifique, combinant traitement thermique et mécanique, notamment homogénéisation, afin d'obtenir un Cream Cheese végétal lisse avec une couleur blanche. Selon les auteurs, ce procédé permet d'obtenir une microstructure fortement agrégée, composée de microgels emprisonnant la matière grasse et le produit fini se caractérise par une distribution granulométrique particulière.

En conclusion, les Cream Cheeses végétaux de l'art antérieur à base d'amande sont stabilisés par l'ajout de matières grasses concrètes et/ou par l'ajout d'additifs texturants tels que caroube, guar, xanthane etc... en quantité et qualité nécessaires pour structurer le produit.

L'objectif que s'est fixé la Demanderesse est d'obtenir un Cream Cheese végétal à texture lisse à partir de fruits à coques broyés, ayant un bon profil nutritionnel et notamment une teneur limitée en acides gras saturés, sans recourir à l'ajout d'additifs texturants tels que les gommes et amidons modifiés.

Par Cream Cheese végétal, on entend un produit formulé avec des matières premières végétales se rapprochant au mieux d'un Cream Cheese laitier sur le plan de la texture et du profil organoleptique. Dans le reste du document, le terme Cream Cheese sera utilisé pour décrire ce type de produit.

L'obtention d'analogues végétaux de produits laitiers pose de nombreux problèmes techniques. Contrairement au lait, qui est un liquide, les matières végétales se présentent sous la forme de matériaux solides cohésifs souvent organisés de manière complexe avec des tissus bien différenciés ayant des fonctions biologiques spécifiques (par exemple germe et endosperme dans une céréale). Il s'avère donc difficile d'obtenir un produit onctueux, lisse et homogène (à l'échelle inférieure au millimètre) en partant de particules végétales de taille supérieure au cm et qui ont tendance à donner des produits pâteux et/ou granuleux.

Il est également difficile d'obtenir un produit ayant une typicité laitière ou fromagère à partir de matières premières végétales, notamment la couleur blanche qui permet de rappeler l'univers du fromage.

Un autre problème est de s'affranchir totalement de matières premières animales, telles que les protéines laitières ou les œufs, dont la fonctionnalité texturante, liante, gélifiante, stabilisante, émulsifiante, foisonnante, etc... pourrait être mise à profit.

Un problème technique proche est d'avoir un produit fini dénué d'additifs tels qu'émulsifiants, gommes et autres hydrocolloïdes (guar, xanthane, caroube, carraghénanes), ingrédients couramment utilisés dans les fromages vegan pour leur fonctionnalité texturante et stabilisante : les texturants modifient le comportement rhéologique des Cream Cheese, les rendant plus ou moins fermes, tartinables, cassants, rhéofluidifiant, etc... Ils ont également un rôle stabilisant par leur capacité à lier l'eau libre, limitant ainsi les risques de synérèse (exsudation d'eau) sur le produit fini, phénomène perçu comme un défaut de qualité. Ils minimisent également le risque d'obtenir une texture « farineuse » (granular or grainy structure) en limitant les interactions entre protéines et matières grasses pouvant conduire à la formation d'agrégats de taille perceptible en bouche. Les hydrocolloïdes sont classiquement utilisés à des doses comprises entre 0.2 et 0.5 g/100g, seuls ou en mélange, ce qui permet au formulateur d'ajuster le niveau de texture du Cream Cheese tout en garantissant la stabilité dans le temps de cette texture (Guinee, T. & Hickey, M., « Cream Cheese and Related Products », 2009, in Dairy Fats and Related Products, Chapter 8, 195 - 256).

Un autre problème technique est d'utiliser majoritairement des huiles fluides plutôt que des matières grasses concrètes, qui sont solides à basse température et confèrent une texture crémeuse et fondante au Cream Cheese. L'utilisation de matières grasses concrètes telles que l'huile de coco, le palme ou encore le beurre de cacao est répandue dans l'univers des analogues fromagers végétaux : par exemple, les produits Creamy Original (Violife), Simply V (Hochland) et Frischcreme (Bedda) contiennent entre 20 et 30% de coprah, matière grasse qui contient plus de 90% d'acides gras saturés (AGS) sur le total des acides gras. Cette quantité et qualité de matière grasse (très concrète) génère un niveau élevé de texture après stockage à une température inférieure ou égale à 10°C : utiliser à la place une huile fluide à cette température conduit à un déficit important de texture qu'il faut combler. Aucun produit commercial sur le marché ne répond à la fois à la contrainte d'utiliser une purée d'amandes sans recourir à des additifs (hydrocolloïdes et/ou acidifiants) ou à des matières grasses concrètes pour structurer et stabiliser le Cream Cheese.

Il est également difficile d'obtenir un Cream Cheese qui a un profil sensoriel de produit laitier et en particulier les notes beurre-crème caractéristiques. Le profil aromatique comporte souvent des notes végétales détectables et qui peut ne pas convenir à certains consommateurs à la recherche d'une expérience sensorielle semblable à celle d'un produit laitier.

Grace à une sélection spécifique des matières premières végétales, couplée à une maitrise d'un procédé permettant de générer des Cream Cheeses, la Demanderesse est parvenue à préparer des produits alimentaires composés de matières premières végétales et qui présentent des qualités organoleptiques reproduisant celles de fromages à tartiner de type Cream Cheese sans additif tout en ayant un profil nutritionnel amélioré par rapport aux référents laitiers et aux autres analogues végétaux.

Avantageusement, cette sélection de matières premières végétales permet de proposer des produits présentant une teneur significative en protéines (supérieure ou égale à 3%) et en fibres alimentaires (supérieure ou égale à 3%), une teneur modérée en matières grasses (inférieure à 20%) et en acides gras saturés (inférieure à 8%) ainsi que des formulations « Clean Label » c'est-à-dire dépourvues d'additif alimentaire, avec des profils nutritionnels supérieurs à des équivalents fromagers, en l'occurrence via un Nutri-Score A à B. Le Nutri-Score est un outil d'évaluation de la qualité nutritionnelle mis en place en 2016 en France dans le cadre du Plan National Nutrition et Santé. Selon ses caractéristiques nutritionnelles, un produit alimentaire obtient une note Nutri-Score variant de A (produits les plus favorables sur le plan nutritionnel) à E (produits les moins favorables, dont la consommation doit être limitée).

Une vraie difficulté technique est apparue pour proposer des produits au Nutri-Score A/B sans additifs (c'est-à-dire notamment sans épaississant, ni stabilisant). En effet, l'obtention de ces notes au Nutri-Score est dépendante de l'utilisation d'huiles liquides (faibles teneurs en acides gras saturées) qui, en l'absence de stabilisant, rend les mélanges de matières potentiellement instables (déphasage, sédimentation). La présente invention s'appuie sur un choix de matières premières spécifiques couplé à des procédés de mélange et de cisaillement pour s'abstenir de l'utilisation d'additif en restant sur des Nutri-Scores A/B.

L'absence d'additif de type texturant (agar, caroube, xanthane, carraghénanes, pectine, etc...) dans les formules a également dû être compensée par des ingrédients de type amidon et/ou farine. Cette compensation n'est pas sans conséquence et a entraîné notamment deux nouveaux problèmes techniques :
- Une dégradation organoleptique du produit avec une augmentation des gouts et odeurs indésirables végétales et une perte de blancheur. En effet, outre les notes végétales et colorations classiquement plus marquées sur des ingrédients de type farine ou amidon que sur des texturants de type additifs, les teneurs incorporées pour produire un effet texturant similaire sont nettement plus importantes ce qui empire d'autant les défauts organoleptiques de gout et couleur. Il est alors essentiel de choisir des ingrédients qui permettent de limiter/supprimer ces défauts.
- Une plus grande évolutivité de texture au cours de la durée de vie du produit avec notamment des phénomènes de rétrogradation de l'amidon observés, synonyme de prise en fermeté au cours de la conservation à 4-6°C.

La présente invention permet également de résoudre la problématique de composition de la plupart des « fromages » végétaux qui ne contiennent que très peu (moins de 1%) de protéines. Les produits selon l'invention contiennent classiquement entre 3 et 10% en poids de protéines sans nécessiter l'ajout de concentrât ou d'isolat protéique et ont donc un profil nutritionnel amélioré par rapport aux fromages vegan de l'art antérieur, avec des notes Nutri-Score de A à C pour les valeurs préférentielles.

Enfin, la présente invention permet de contourner les problématiques de défauts de gout, de couleur et de texture fréquemment retrouvés dans les analogues végétaux de fromages. Contrairement aux produits actuellement présents sur le marché, les produits issus de cette invention sont très proches des équivalents laitiers sur ces 3 critères.

L'obtention de textures lisses et gourmandes pour des produits Vegan à teneur en protéines végétales supérieure à 3% sans texturant ni stabilisant reste en effet une difficulté technique majeure. La présente invention permet ainsi de répondre à cette problématique via la mise en place de leviers formules et procédés qui génèrent des textures sans défaut de farineux.

De même, l'aspect blanc d'un produit Vegan avec des teneurs significatives en protéines est une réelle difficulté mais reste pourtant un élément essentiel pour rappeler l'équivalent fromager. On retrouve sur le marché de nombreux produits Vegan aux aspects bien blancs mais basés sur des formulations de type Eau + huile + texturants donc sans protéine. Là encore, afin de contourner cette difficulté technique, des leviers formules (choix des bonnes matières premières) et procédés (étapes de mélange et d'homogénéisation) ont permis de retrouver un aspect identique à un Cream Cheese laitier.

La présente invention se rapporte ainsi à un produit alimentaire végétal analogue à un Cream Cheese, comprenant :
- des fruits à coques broyés, de préférence sous forme de purée et de préférence de la purée d'amandes ;
additionnés de :
- au moins une matière grasse végétale ;
- au moins une source d'amidon ;
- au moins une source de fibres alimentaires végétales ; et
- de l'eau ;
caractérisé en ce qu'il ne contient aucun additif ajouté et en ce qu'il a une taille médiane de particules D50 inférieure à 50 microns, préférentiellement inférieure à 40 microns, plus préférentiellement inférieure à 30 microns.

De façon plus spécifique, la présente invention se rapporte à un produit alimentaire végétal comprenant (pourcentages exprimés en poids par rapport au poids total du produit) :
- de 5 à 40%, de préférence entre 10% et 30% et plus préférentiellement environ 15%, de fruits à coques broyés de préférence sous forme de purée. Les particules de ladite purée ont une taille médiane de particules mesurée par granulométrie laser inférieure ou égale à 50 µm ;
- de 5 à 35% de matière grasse végétale, de préférence de 5 à 30% et encore préférentiellement de 5 à 20% ;
- jusqu'à 8% d'acides gras saturés, préférentiellement jusqu'à 5%, encore préférentiellement jusqu'à 3% ;
- de 0,5 à 20%, de préférence de 1 à 15%, encore préférentiellement de 3 à 10%, en particulier environ 3%, d'une source d'amidon telle que farine végétale ou amidon ;
- jusqu'à 30% d'autres matières premières, de préférence végétales, telles que purées ou morceaux de légumes ou de fruits, graines ou herbes, arômes ;
- jusqu'à 8% de fibres alimentaires végétales ;
- optionnellement ajout d'une source naturelle de calcium de type Lithothamne ; selon la teneur en calcium de la poudre de Lithothamne utilisée, cet ingrédient peut être ajouté à une teneur comprise entre 0,5 et 1% ;
- jusqu'à 3,5% d'acidifiant de type jus de citron concentré ; selon un mode de réalisation particulier qui ne met pas en œuvre de source naturelle de calcium, l'acidifiant peut être utilisé en une teneur moindre qui peut aller jusqu'à 1,2% ;
- jusqu'à 1,5%, de préférence moins de 1% de sel alimentaire ;
- optionnellement, jusqu'à 1% de ferments ; si le ferment est utilisé pour fermenter tout ou partie du fruit à coque broyé, sa teneur peut être réduite à 0,2% ;
- de l'eau, entre 50% et 75%, préférablement de l'ordre de 65%.

Ce produit se caractérise par :
- une teneur en extrait sec comprise entre 20 et 50%, préférentiellement entre 30 et 45% ;
- un pH compris entre 4.0 et 5.2 ;
- des caractéristiques d'un produit laitier frais, en particulier la couleur blanche, l'aspect lisse, la rhéologie tartinable, la texture peu granuleuse et un goût frais à fermenté/acide.

Par tartinable, on entend un comportement rhéologique dit « élastoplastique », c'est-à-dire d'abord élastique aux faibles déformations puis qui devient plastique au-delà d'une contrainte seuil appelée seuil d'écoulement. Ce comportement rhéologique est commun aux margarines, aux beurres de cacahouète, sauce mayonnaise, cream cheese etc... et permet au consommateur de les étaler sans effort sur un support à l'aide d'un couteau.

Ce caractère tartinable peut avantageusement être caractérisé à l'aide de la méthode dite scissométrique (Vane method). Le principe de la méthode est d'enfoncer une géométrie de type ailette (constituée d'un axe fin et cylindrique sur lequel sont disposées 4 à 8 pales rectangulaires orientées de manière régulière et symétrique par rapport à l'axe) au sein du produit à étudier puis d'effectuer une rotation à une vitesse constante faible (Daubert, C., Tkachuk, J.A and Truong, V.D., 1998, « Quantitative measurement of food spreadability using the Vane method », Journal of Texture Studies, 29, 427-435). La contrainte augmente d'abord linéairement avec le temps (et donc la déformation, ce qui correspond au comportement élastique) puis passe par un maximum, correspondant au seuil d'écoulement et rediminue, indiquant un comportement plastique, caractérisé par des déformations importantes et irréversibles au-delà du seuil. Ce type fournit donc deux indicateurs de ce comportement élastoplastique : le seuil d'écoulement (homogène à une contrainte, donc exprimé en Pascal, noté Pa) et la déformation à laquelle le seuil est observé (qui peut s'exprimer de différentes manières).

Le Cream Cheese selon l'invention se caractérise par une contrainte d'écoulement comprise entre 0.4 et 5 kPa et une déformation angulaire comprise entre 0.1 et 0.4 radians.

Par texture peu granuleuse, on entend une distribution en taille de particules ayant un diamètre médian inférieur à 50 microns, qui est l'ordre de grandeur des particules qui sont sensoriellement perceptibles en bouche.

Les distributions de taille de particules présentes dans les purées d'amandes et les Cream Cheese ont été déterminées par granulométrie laser, en utilisant des équipements commerciaux tels que Malvern 3000 et Horiba LA 960. Le principe de la granulométrie laser est de mesurer l'intensité lumineuse diffusée par l'échantillon à différents angles et d'en déduire par calcul la distribution de taille de particules idéales qui diffuserait le même profil d'intensité diffusée. Les bonnes pratiques concernant cette méthode sont décrites en détail dans la norme ISO 13320 :2020 (Particle size analysis — Laser Diffraction Methods) et ont été suivies, en intégrant également les conseils de l'Homme du métier.

Une fois la distribution de taille de particules calculée, il est possible de déterminer la taille médiane des particules, notée D50, qui correspond au diamètre médian de la distribution, moyennée en volume. Par définition, 50% de la distribution a une taille inférieure à celle de D50 et 50% a une valeur supérieure à 50%.

Pour la détermination de la taille de particules des purées de fruits à coque, celles-ci ont été dispersées à 10% dans de l'huile de tournesol sous agitation pendant 30 minutes puis incorporées dans la cellule de mesure du granulomètre. Du fait de l'absence de contraste entre la matière grasse du fruit à coque et la phase continue, seules les particules de paroi de fruit à coque sont détectées. Celles-ci étant suffisamment opaques, l'approximation de Fraunhofer a été utilisée pour établir une distribution en taille.

Pour la détermination de la taille des particules dans le Cream Cheese, l'échantillon est préalablement dilué à 10% dans de l'eau distillée puis laissé sous agitation pendant 30 minutes avant d'être injecté dans la cellule de mesure pour une série d'au moins 5 répétitions qui sont ensuite moyennées. L'analyse a été réalisée à l'aide du modèle de Mie en prenant la valeur de 1.33 pour l'indice de réfraction de l'eau et les valeurs de 1.47 et 0.001 respectivement pour les parties réelle et imaginaire de l'indice de réfraction des particules.

De préférence, ce produit alimentaire ne contient aucun autre ingrédient que ceux listés ci-dessus et détaillés ci-après ; en particulier, il est dépourvu de tout produit d'origine animale, notamment des protéines, de lactose, et d'additif alimentaire.

Par additif alimentaire, on entend une substance ajoutée aux aliments dans un but technologique : améliorer leur conservation, réduire les phénomènes d'oxydation, colorer les denrées, renforcer leur goût, etc..., il peut s'agir de colorants (incluant des agents blanchissants), de conservateurs, d'anti-oxydants, d'acidifiants/correcteurs d'acidité et d'agents de texture (stabilisant, émulsifiant, épaississant, gélifiant). L'utilisation d'additifs alimentaires est régie par le Règlement (CE) N°1333/2008 et ces substances sont identifiées par un code au format « E » suivi d'un numéro.

Le produit alimentaire selon l'invention est également dépourvu de tout ingrédient à base de soja. En outre, le produit alimentaire selon l'invention ne contient pas d'isolat ou de concentrât protéiques qu'ils soient d'origine animale ou végétale, ni de lait de céréales ou de légumineuse.

Fruits à coques : le produit alimentaire selon l'invention est constitué d'une base d'un ou de plusieurs fruits à coques, par exemple choisis parmi : l'amande, la noisette, la noix, la noix de cajou, la noix de pécan, la noix du Brésil, la noix de Macadamia, seul ou en mélange ; préférentiellement, il s'agit d'une purée de fruits à coques, préférentiellement d'amande blanche. On entend par purée une préparation de fruits à coques broyés finement sans aucun ajout d'ingrédient, préférentiellement issue d'un procédé de broyage très fin (taille médiane de particules de moins de 50 µm) et réalisé sur des fruits à coques émondés, blanchies et non torréfiés.

Selon un mode de réalisation préféré, le produit alimentaire végétal selon l'invention est préparé avec une purée d'amandes blanchies avec des tailles de particules inférieure à 50 µm et permet l'obtention de texture lisse et blanche. Le choix de cette matière première est également couplé à un procédé de mélange et de cisaillement qui permet de proposer des textures parfaitement lisses en bouche sans défaut de farineux.

Selon la fermeté souhaitée du produit fini, la teneur en purée d'amandes peut être modulée pour réduire ou augmenter l'extrait sec et notamment la teneur en matière grasse et protéines.

Matière grasse végétale : différentes sources de matières grasses végétales peuvent être utilisées : des huiles telles que l'huile de colza, l'huile de tournesol, l'huile d'olive, l'huile de pépins de raisin, l'huile de lin, l'huile de chanvre etc... et des matières grasses concrètes telles que coprah, beurre de cacao, beurre de karité, etc... il peut être utilisé un mélange de différentes matières grasses végétales.

Le choix de la ou des matières grasses végétales est dépendant de leur teneur en acides gras saturés, qui impacte le profil nutritionnel du produit fini, ainsi que de leur couleur et de leur profil organoleptique.

Ainsi, les matières grasses sont choisies de telle sorte que la teneur en acides gras saturés du Cream Cheese ne dépasse pas 8%, de préférence 5%, encore préférentiellement 3% en en poids par rapport au poids total de produit fini.

Selon un mode de réalisation préféré, les matières grasses végétales utilisées dans le cadre de l'invention sont les huiles végétales fluides, c'est-à-dire des matières grasses liquides à température ambiante (environ 20°C) et ayant donc une très faible teneur en acides gras saturés (inférieure à 15%, de préférence à 10%). Par exemple, la teneur en acides gras saturés est inférieure à 10% pour l'huile de colza, inférieure à 12% pour l'huile de lin et inférieure à 15% pour l'huile de tournesol ; avantageusement et malgré la sensibilité connue des huiles à l'oxydation et les différents traitements thermiques réalisés lors de la préparation du produit (pasteurisation du mix et dosage à chaud), le produit fini dans son emballage est stable dans le temps et aucune note rance n'est perceptible en fin de conservation ; de préférence, l'huile végétale est choisie parmi l'huile de colza, l'huile de tournesol et l'huile d'olive ou leur mélange.

Tout comme pour la purée de fruits à coque, le pourcentage d'utilisation de la matière grasse impacte directement la texture/fermeté du produit fini.

Ferments : ils peuvent être utilisés pour donner du goût et/ou acidifier le mélange, en remplacement de tout ou partie de l'acidifiant. Différents ferments peuvent être incorporés à la formulation et sont connus de l'homme du métier. Il peut notamment s'agir de ferments lactiques mésophiles (*Lactococcus lactis ssp lactis* et/ou *cremoris, Lactococcus lactis ssp lactis biovar diactylactis, Leuconostoc lactis* et/ou *Leuconostoc mesenteroides*) ou thermophiles (*Streptococcus thermophilus, Lactobacillus delbrueckii ssp bulgaricus* et/ou *Lacticaseibacillus casei* et/ou *Levilactobacillus brevis* et/ou *Lacticaseibacillus rhamnosus* et/ou *Lacticaseibacillus paracasei*)*,* de ferments de type *Geotrichum candidum* ou *Penicillium camemberti* ou encore *Pediococcus pentosaceus, Pediococcus acidilactici, Lactiplantibacillus plantarum,* ou encore des levures seules ou en mélange.

Les ferments peuvent être ajoutés à différentes étapes du procédé sous la forme d'un levain composé d'une matière première végétale fermentée. Il est également possible d'ajouter directement les ferments concentrés dans le produit refroidi avant dosage.

Différents ferments lactiques peuvent être utilisés, on peut notamment citer les produits commerciaux comme les gammes Danisco^{®} VEGE Cultures (IFF-DuPont N&B), HOLDBAC^{®} YM VEGE (IFF-DuPont N&B), Yoflex^{®} (Chr Hansen) seul ou en combinaison avec LGG^{®} (Chr Hansen) ou BB-12^{®} (Chr Hansen).

L'ajout de ferments dans le produit selon l'invention n'a pas pour effet de le texturer par un phénomène de coagulation par exemple.

Dans le cas de la préparation préalable d'une matrice végétale fermentée, aussi appelée levain, celle-ci peut être obtenue de la manière suivante : un fruit à coque ou un mélange de fruits à coque, sous forme de broyat ou de purée, préférentiellement de purée d'amandes, est additionné d'eau de manière à obtenir un mélange contenant de 5 à 30% de fruits à coque puis traité thermiquement afin d'éliminer les flores indigènes. Ce mélange est ensuite fermenté de manière à obtenir un levain, tel que décrit dans l'exemple 5. Cette base est inoculée avec un ou plusieurs microorganismes, préférentiellement des bactéries lactiques, connues par l'homme de l'art comme pouvant apporter par fermentation des notes laitières, dont des notes de « frais » et/ou de « crème » et/ou de « beurre » et/ou de chèvre au produit fermenté. Ces cocktails de souches peuvent être composés de une ou plusieurs souches, d'une ou plusieurs espèces parmi les espèces suivantes : *Lactococcus lactis ssp lactis* et/ou *cremoris, Lactococcus lactis ssp lactis biovar diactylactis, Leuconostoc lactis* et/ou *Leuconostoc mesenteroides, Streptococcus thermophilus, Lactobacillus delbrueckii ssp bulgaricus, Lacticaseibacillus casei, Levilactobacillus brevis, Lacticaseibacillus rhamnosus, Lacticaseibacillus paracasei, Pediococcus pentosaceus, Pediococcus acidilactici, Lactiplantibacillus plantarum* ou encore des levures seules, ou en mélange.

Le mélange est ensuite incubé à une température favorisant la croissance du ou des microorganismes inoculés dans une gamme de température comprise entre 20°C et 45°C. La durée de l'incubation est comprise entre 15h et 48h.

Le levain est ensuite incorporé, par exemple au moment du mélange des matières végétales de la préparation du Cream Cheese, à hauteur de 5 à 60% du mélange final.

Source d'amidon : cet ingrédient peut être choisi parmi la farine de riz, la farine de pois chiche, la farine de pois, la farine de féverole, la farine de haricot, la farine de lupin, la farine de lentille, la farine de châtaigne, l'amidon de riz, l'amidon de blé, l'amidon de maïs, l'amidon de tapioca, l'amidon de pomme de terre... de préférence, on utilisera de la farine de riz ou de la fécule de pomme de terre ou de manioc.

De par sa composition riche en amidon (80%), la farine de riz est un ingrédient intéressant pour proposer des produits Clean Label, sans additif. Son aspect blanc et son gout relativement neutre en comparaison avec d'autres farines permet l'obtention de produits très proches en aspect et en gout d'un Cream Cheese fromager. Enfin, l'absence de gluten et sa non-allergénicité sont des propriétés intéressantes.

Pour les mêmes raisons, la fécule de pomme de terre ou de manioc est un ingrédient d'intérêt pour proposer des textures lisses et fondantes sans fort impact sur la couleur et le gout.

Outre la viscosité à chaud et les propriétés organoleptiques, un autre critère qui peut être pris en compte pour le choix des références de farine de riz et/ou de fécule repose sur les différences de rétrogradation observées. La rétrogradation est un phénomène de recristallisation de l'amidon (composé de chaînes d'amylopectine et d'amylose) au cours de la conservation qui conduit à un durcissement progressif du produit, dont la texture devient moins souple et plus friable, ce qui n'est pas toujours souhaité et qui peut ne pas être apprécié par le consommateur.

Plusieurs références de farine et amidon ont ainsi pu être testées et ont clairement montré des différences significatives de comportement au cours du vieillissement des produits. Cette différence peut venir de l'origine du produit, de sa composition, ou du procédé de préparation utilisé par le fournisseur. Le choix du type, de l'origine et de la référence des sources d'amidon peut avoir des impacts sur la texture et le goût du produit que l'Homme de l'art pourra ajuster selon ses objectifs et préférences, en lien avec la durée de conservation et le mode d'utilisation souhaités pour ce produit.

Les références présentant le moins de rétrogradation au cours du temps sont privilégiées dans le cadre de la présente invention en ce qu'elles permettent d'assurer une stabilité de texture du Cream Cheese au cours de la conservation à 4°C-10°C.

Ainsi, lorsque de la farine de riz est utilisée, on choisira de préférence du riz prégélatinisé.

Afin de préparer des produits alimentaires selon l'invention de type foisonnés, il est avantageux d'utiliser de la fécule de pomme de terre ou de manioc comme source d'amidon (voir exemple 4).

Autres matières premières de préférence végétales : ces matières premières sont distinctes des autres ingrédients végétaux de la recette (purée de fruit à coque, huile, farine ou amidon, fibres) ; elles viennent en compléments des autres ingrédients végétaux listés et elles peuvent être choisies parmi l'ail, fines herbes, herbes de Provence, épices, graines, légumes, calcium tel qu'un extrait de Lithothamne, fruits et céréales sous forme d'inclusions, de pâtes ou de purées, arômes (par exemple pour apporter une typicité crème, beurre, chèvre, emmental, cheddar, brebis), etc...

Fibres alimentaires végétales : les fibres alimentaires utilisables dans le cadre de l'invention sont :
- les fibres solubles faiblement texturantes, telles que fibres de chicorée (inulines et fructooligosaccharides), dextrines résistantes ou tout autre oligosaccharide indigestible d'origine végétale, ayant une faible masse molaire, un goût neutre, une solubilité élevée dans l'eau et une tendance limitée à la recristallisation ; et/ou
- les fibres insolubles ou partiellement solubles sous réserve d'avoir une taille et forme de particules les rendant indétectables en bouche et une faible capacité de rétention d'eau ; de préférence, on utilisera les fibres solubles non texturantes.

Il peut être utilisé un mélange de plusieurs fibres alimentaires végétales.

L'utilisation de fibres végétales permet avantageusement de formuler des produits ayant une note A au Nutri-Score.

On pourra notamment ajouter de l'inuline (fibres de chicorée) dans les produits où l'on souhaite une texture fondante et onctueuse.

Le choix de la référence et de l'origine des fibres peut avoir des impacts texture et gout que l'Homme de l'art pourra ajuster selon ses objectifs et préférences.

Acidifiant : de préférence, on choisira le jus de citron concentré ou le jus de pamplemousse concentré ou autres agrumes, plus préférentiellement le jus de citron concentré. Cet ingrédient permet d'obtenir un pH final du produit entre 4,0 et 5,2 correspondant à celui des produits laitiers de l'univers de Cream Cheese.

Composition nutritionnelle du Cream Cheese selon l'invention :

**Tableau 1**

| | Energie (kcal) | Protéines (%) | Matières grasses (%) | Dont acides gras saturés (%) | Glucides (%) | Fibres (%) |
|---|---|---|---|---|---|---|
| Gamme | 150-350 | 3-12 | 8-32 | 1-8 | 1-20 | 0,5-8 |

Le Cream Cheese selon l'invention présente les caractéristiques suivantes :
- une couleur la plus blanche possible pour retrouver les codes du fromage ;
- une texture lisse et fondante, sans défaut de farineux ; ceci est en particulier obtenu grâce à une granulométrie des particules du Cream Cheese qui présentent une taille médiane de particules D50 inférieure à 50 microns, préférentiellement inférieure à 40 microns, plus préférentiellement inférieure à 30 microns ;
- un gout le plus laitier possible, sans gout végétal indésirable.

Des versions aromatisées aux couleurs marquées, sortant des codes connus du fromage, peuvent bien entendu être envisagées, par exemple avec l'ajout de matière première végétale issue de carotte, betterave, haricots verts, etc....

L'ajout d'herbes ou de plantes peut également être envisagé pour proposer des versions aromatisées de type Ail & fines herbes par exemple.

Le procédé de préparation du produit selon l'invention comprend les étapes suivantes :
A) optionnellement, fermentation d'une partie ou de la totalité des fruits à coque broyés, sous leur forme réhydratée et traitée thermiquement préalablement à l'inoculation des ferments ;
   Cette étape a pour objectif d'améliorer le profil organoleptique du produit fini en apportant une typicité fromagère/laitière. Le fruit à coque est préférentiellement l'amande.
   Le produit fermenté ainsi obtenu peut être ajouté à l'étape B) ou entre les étapes D) et G).
B) mélange des matières premières via un cisaillement énergique, et, optionnellement, préchauffage par exemple via injection de vapeur ou dispositif à double paroi ;
   Cette étape permet l'hydratation des ingrédients, notamment des poudres, jusqu'à obtention d'une suspension globalement liquide et homogène ; elle est de préférence conduite à une température comprise entre 20 et 65°C, pendant 1 à 30 minutes, sous agitation modérée à élevée dans un cuiseur ou une cuve agitée ; préférentiellement, cette étape est conduite dans un cuiseur à environ 50°C, pendant 5 minutes avec une agitation modérée.
C) traitement thermique du mélange à une température comprise entre 75 et 90°C, par exemple avec injection de vapeur ou double paroi, pendant 1 à 10 minutes sous cisaillement énergique ;
   Cette étape permet la fonctionnalisation des ingrédients et la pasteurisation des matières premières ; elle est de préférence réalisée à 82°C pendant 2 minutes.
   Le mélange peut ensuite optionnellement être transféré en cuve tampon avec maintien à une température comprise entre 70°C et 85°C.
D) dégazage optionnel et homogénéisation ;
   Cette étape est de préférence conduite entre 50 bars à 600 bars, de préférence 300 à 500 bars. Cette étape permet entre-autre une coloration plus blanche de la pâte et l'obtention d'une émulsion stable et la réduction de la taille de particules afin de rendre la texture lisse.
E) optionnellement, foisonnement pour produire une texture aérée ;
   Cette étape permet de générer une texture aérée pour augmenter la gourmandise ; elle peut être conduite par injection d'azote sur un foisonneur continu avec des taux de foisonnement compris entre 0% et 30%.
   Le taux de foisonnement pour un volume donné est défini comme la différence entre la masse de produit non foisonné et la masse de produit foisonné, cette valeur étant rapportée à la masse de produit non foisonné et exprimée en %.
F) optionnellement, ajout d'autres matières premières de préférence végétales (herbes, ingrédients aromatiques, marquants, matière première végétale fermentée...) ;
   Selon les technologies de foisonnement, il est possible d'inverser les étapes E) et F).
G) dosage à chaud du produit fini dans son emballage ou dans un containeur intermédiaire (fût/outre/poche...) ; le dosage à chaud est conduit à une température supérieure à 70°C, de préférence comprise entre 74 et 80°C ;
H) refroidissement entre 4 et 10°C ;
I) optionnellement dans le cas d'un dosage dans un containeur intermédiaire, ajout d'autres matières premières de préférence végétales (aromatisantes) et/ou de ferments puis dosage à froid du produit dans son emballage final.

L'ajout des ingrédients peut se faire entre 4 et 20°C, préférentiellement à 10°C. Ce mode de réalisation nécessite un choix d'ingrédients aromatiques fortement réduits en charge microbienne pour assurer une stabilité microbiologique au cours de la conservation du produit. L'ajout de ferments permet d'améliorer le profil organoleptique du produit et/ou la stabilité microbienne du produit fini. Le choix des ferments appropriés est connu de l'Homme du métier.

Le tableau ci-dessous reprend les opérations unitaires pouvant être mises en œuvre dans le procédé selon l'invention et indiquées dans les exemples qui suivent :

**Tableau 2**

| **Etape unitaire** | **Fonction** | **Valeurs possibles** | **Valeurs préférentielles (mises en œuvre dans les exemples qui suivent)** |
|---|---|---|---|
| Fermentation matières premières (étape optionnelle) **A** | Améliorer le profil organoleptique des matières premières en apportant une typicité fromagère/laitière | Fermentation de fruits à coques | Fermentation jus d'amande |
| Réhydratation, Mélange et Préchauffage optionnel) des ingrédients **B** | Mélanger les différents ingrédients de manière à obtenir une suspension globalement liquide et homogène | Température de mélange entre 20 et 65°C Temps de mélange entre 1min et 30 min Cuiseur, cuve agitée | Cuiseur, mélange 5 min à 50°C |
| Pasteurisation **C** | Fonctionnalisation des ingrédients par le traitement thermique et pasteurisation des matières premières | 75°C à 90°C | 82°C, 2 min |
| | | De 1 à 10 min | |
| Dégazage (optionnel) et Homogénéisation **D** | Emulsion stable, réduction taille de particules pour texture lisse et enfin, levier de texturation | 50 à 600 bars | 300 - 500 bars |
| Foisonnement (Étape optionnelle) **E** | Générer une texture aérée pour augmenter la gourmandise | Injection azote sur foisonneur avec paramètres connus de l'Homme du métier | Ajuster selon taux de foisonnement choisi (0-30%) |
| Injection d'ingrédients (Etape optionnelle) **F** | Apporter des marquants et/ou une aromatisation | Aucune limite pour l'aromatisation. | |
| | | Taille des marquants max dépendant des buses de dosages | |
| Dosage (emballage final ou fut) **G** | Doser le produit | Dosage à chaud > 70°C | T°C de dosage à chaud entre 72°C et 80°C |
| Refroidissement | Refroidir et texturer le produit pour l'obtention d'une base ou d'un produit fini | T°C=4°C - 10°C | T°C de stockage entre 4°C et 10°C |
| **H** | | | |
| Injection d'ingrédients (Etape optionnelle) et dosage dans l'emballage final **I** | Apporter des marquants ou aromates ou un/des ferments pour une aromatisation et/ou améliorer la conservation du produit | T°C = 4 - 20°C | T°C : 10°C |

### FIGURES

La figure 1 est une photographie du produit de l'exemple 1 qui est un Cream Cheese végétal non foisonné ;
Figure 2 : représentation graphique de l'évaluation sensorielle du Cream Cheese de l'exemple 5.

### EXEMPLES

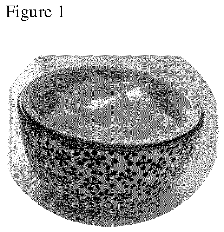

**Exemple 1** (figure 1) : le produit de type Cream Cheese est composé de 60% eau, 15% purée d'amandes, 10% huile de colza, 10% farine de riz, 2.5% inuline, 1% NaCl, 1.5% jus de citron concentré.

Le procédé comprend les étapes suivantes du tableau 2 décrit plus haut, à savoir : B ― C ― D ― G ― H

On obtient un produit fini ayant l'aspect d'une pâte fraîche laitière, avec une texture lisse, blanche tartinable (voir figure 1). Le produit a un pH de 4,7 et peut être conservée avant ouverture plusieurs semaines (70 jours) à une température de 4 à 10°C sans montrer d'évolution notable en termes de texture ou de goût.

Les valeurs nutritionnelles du produit de l'Exemple 1 sont indiquées ci-dessous :

**Tableau 3**

| Teneur pour 100g | |
|---|---|
| Energie (kcal) | 234 |
| Protéines | 4 |
| Glucides | 12,5 |
| Dont sucres | 0,9 |
| Lipides | 18 |
| Dont Acides Gras Saturés | 2 |
| Fibres | 3 |

L'ajout d'ingrédients de type herbes, ail ou épices est une variante de cette formule Nature, ces ingrédients étant ajoutés à l'étape F.

Les étapes B) et C) peuvent être notamment réalisées avec cuiseur de type Stephan ou Karl-Schnell via des paramètres de cisaillement connus de l'Homme du métier. Dans ce cas précis, les deux étapes de mélange ont été réalisées à 1500 rpm.

**Exemple 2** : le produit de type Cream Cheese est composé de 61.6% eau, 13% purée d'amandes, 8% huile de colza, 3% Coprah, 11% farine de riz, 1% inuline, 1.2% NaCl, 1% jus de citron concentré, 0,2% arôme naturel.

Le procédé comprend les étapes suivantes du tableau 2 décrit plus haut, à savoir : B ― C ― D ― G ― H.

Tout comme l'Exemple 1, l'ajout d'ingrédients de type herbes, ail, épices ou autres ingrédients aromatiques (légumes, fruits) est une variante de cette formule Nature, ces ingrédients étant ajoutés à l'étape F.

**Exemple 3 :** Produit composé de 58,9% eau, 15% purée d'amandes, 10% huile de colza, 10% farine de riz, 2.5% inuline, 1,5% amidon de pomme de terre, 0.7% NaCl, 0,9% jus de citron concentré et 0,5% d'une poudre commerciale de Lithothamne L'ajout d'ingrédients de type herbes, ail ou épices est une variante de cette formule.

Le procédé comprend alors les étapes suivantes du tableau 2 décrit plus haut : B ― C ― D ― F ― G ― H ou bien même encore B -C -D- G-H - I.

**Exemple 4 - Cream Cheese foisonné :** Produit composé de 65.1% eau, 19% purée d'amandes, 8% huile de colza, 4.5% fécule de pomme de terre, 3,5% inuline, 0.8% NaCl, 1,3% jus de citron concentré.

L'ajout d'ingrédients de type herbes, ail ou épices est une variante de cette formule.

Le procédé retenu pour l'exemple est celui correspondant aux valeurs préférentielles du tableau 2 décrit plus haut, à savoir : B - C - D - E - G - H ou bien (si ajout d'ingrédients) : B - C - D - E - F - G - H ou bien encore si ajout d'une étape de fermentation : A - B - C -D-E-F-G-H.

### Exemple 5 :

Dans l'exemple suivant, la purée d'amandes additionnée d'eau, a été inoculée et fermentée par une souche de l'espèce *Lactococcus lactis ssp lactis biovar diacetylactis.* Le mélange obtenu a été fermenté à 30°C pendant 24h afin d'obtenir ce qui sera appelé un levain.

Le levain est ensuite incorporé lors de l'étape B) à hauteur de 30% dans le mélange final. Un produit sans levain a également été réalisé à titre de comparaison. La composition des deux produits est équivalente et se résume dans le tableau suivant :

**Tableau 4**

| **Ingrédients** | **Produit avec incorporation de 30% de levain** | **Produit sans incorporation de levain** |
|---|---|---|
| Purée d'amandes | 10,5% | 15% |
| Levain fermenté (15% purée d'amandes + 85% eau) | 30% | 0 |
| **Purée d'amandes totale** | **15%** | **15%** |
| Huile | 10% | 10% |
| Farine de riz | 10% | 10% |
| Inuline | 2,5% | 2,5% |
| Sel | 1% | 1% |
| Jus de citron | 1,5% | 1,5% |
| Eau | 34,5% | 60% |

Le procédé mis en œuvre est celui de l'Exemple 1.

Les deux produits ont été réalisés le même jour.

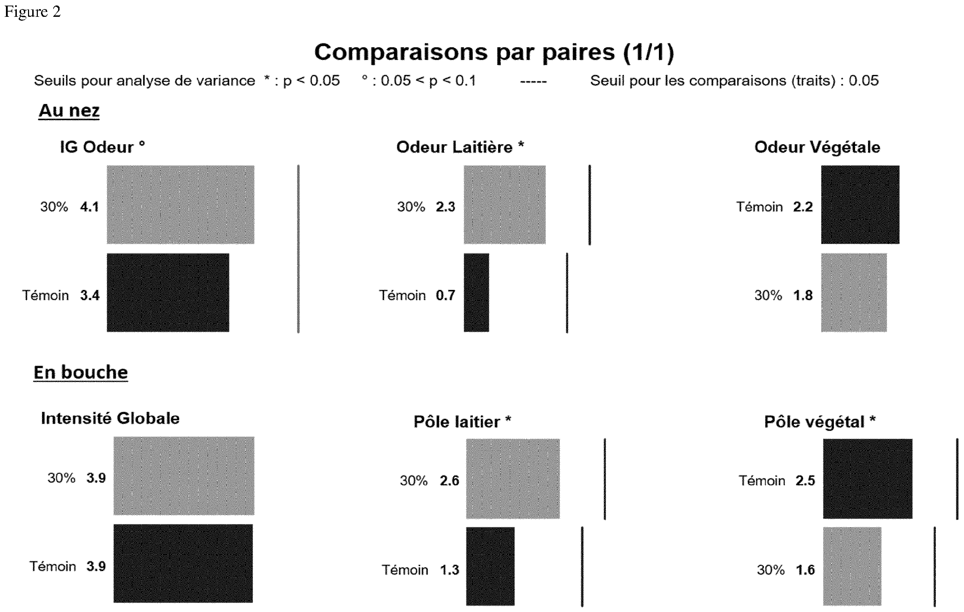

Dans cet exemple, la nature de l'intérêt aromatique et sapide apporté par le levain au Cream Cheese a été évalué et validé par une évaluation sensorielle réalisé avec un panel de 10 juges selon un protocole en « double aveugle » c'est-à-dire que les juges n'avaient pas connaissance du projet, de la nature de la problématique et ni de celle des échantillons. L'ordre de dégustation était également différent et aléatoirement attribué à chaque juge. Deux produits Cream Cheese ont été comparés lors de cette évaluation : le produit Cream Cheese embarquant le levain à hauteur de 30% (« 30% » sur le graphique de la figure 2) et le produit Cream Cheese sans levain (« Témoin » sur le graphique de la figure 2). Ils ont été évalués par olfaction puis par dégustation selon trois critères : l'intensité globale aromatique, l'intensité laitière et l'intensité végétale. Il a été demandé aux juges de décrire la nature de notes aromatiques et sapides perçues en olfaction et en dégustation également.

D'après les données graphiques de la figure 2, les juges perçoivent le produit avec levain significativement plus laitier, en olfaction et en bouche, que le produit sans levain. Ils perçoivent également le produit avec levain significativement moins végétal que le produit sans levain.

Les juges décrivent le produit avec levain comme présentant des notes « beurre », « crème », et « amande » en olfaction et « laitier », « crème acide », « léger amande » en bouche. Le produit sans levain est décrit « végétal », « amande », «cuit» en olfaction et « amande » en bouche.

Ces données permettent de valider le gain aromatique apporté par le levain au produit : une composante laitière est apportée. Une diminution des notes végétales et amande est également perçue en bouche.

### Exemple 6 : Caractérisation de la rhéologie de produits selon l'invention

Plusieurs publications sont disponibles sur la caractérisation rhéologique de Cream Cheeses laitiers avec cette méthode et ont été comparées dans le Tableau 5.

Toutes ces mesures ont été effectuées à la température de 5°C et avec une vitesse de rotation de 0.05 rd/s (publication (1) et présente demande) ou 0.06 rd/s (publication (2)) :

**Tableau 5**

| Produit | Seuil d'écoulement (kPa) | Déformation angulaire (rd) | Source |
|---|---|---|---|
| Kraft Philadelphia Regular | 4.4 | 0.24 | (1) |
| Kraft Philadelphia Neufchatel | 2.7 | 0.43 | (1) |
| Kraft Philadelphia Whipped | 1.3 | 0.63 | (1) |
| Kraft Philadelphia | 2.2 | 0.23 | (2) |
| Produit selon l'invention Exemple 1 | 2.0 ± 0.5 | 0.28 ±0.06 | |
| Produit selon l'invention Exemple 4 (foisonné) | 1.2 ± 0.3 | 0.18 ±0.03 | |

(1) Breidinger, S.L. and Steffe, J.F., 2001, "Texture Map of Cream Cheese", Journal of Food Science, 66, n°3, 453-456.
(2) Coutouly, A., Riaublanc, A., Axelos, M., Gaucher, I., 2014, « Effect of heat treatment, final pH of acidification and homogeneization pressure on the texture properties of Cream Cheese", Dairy Science & Technology, 94, 125-144.

Les produits selon l'invention donnent des valeurs proches du produit Philadelphia de Kraft Foods, produit considéré comme le référent de la catégorie des Cream Cheese, ce qui confirme le caractère tartinable des produits selon l'invention.

## Revendications

1. Produit alimentaire végétal analogue à un Cream Cheese, comprenant :
- des fruits à coque broyés, de préférence sous forme de purée ;
additionnés de :
- au moins une matière grasse végétale ;
- au moins une source d'amidon ;
- au moins une source de fibres alimentaires végétales ;
- un ingrédient naturel acidifiant ; et
- de l'eau ;
**caractérisé en ce qu'**il ne contient aucun additif ajouté et **en ce qu'**il a une taille médiane de particules D50 inférieure à 50 microns.

2. Produit alimentaire végétal selon la revendication 1, **caractérisé en ce qu'**il comprend (pourcentages exprimés en poids par rapport au poids total du produit) :
- de 5 à 40% de purée de fruits à coques broyées ;
- de 5 à 30% de matière grasse végétale ;
- jusqu'à 8% d'acides gras saturés ;
- jusqu'à 1,5% de sel alimentaire ;
- optionnellement, jusqu'à 1% de ferments ;
- de 0,5% à 20% d'une source d'amidon ;
- jusqu'à 30% d'autres matières premières telles que purées ou morceaux de légumes ou de fruits, céréales, graines, arômes, poudre de Lithothamne ou herbes ;
- jusqu'à 8% de fibres alimentaires végétales ;
- jusqu'à 3,5% d'acidifiant de type jus de citron concentré ;
- entre 50% et 75% d'eau.

3. Produit alimentaire végétal selon la revendication 1 ou la revendication 2, **caractérisé en ce qu'**il comprend (pourcentages exprimés en poids par rapport au poids total du produit) :
- de 10 à 30% de purée de fruits à coques broyées ;
- de 5 à 20% de matière grasse végétale ;
- jusqu'à 3% d'acides gras saturés ;
- jusqu'à 1% de sel alimentaire ;
- optionnellement, jusqu'à 1% de ferments ;
- de 1% à 15% d'une source d'amidon ;
- jusqu'à 30% d'autres matières premières telles que purées ou morceaux de légumes ou de fruits, céréales, graines, arômes, poudre de Lithothamne ou herbes ;
- jusqu'à 8% de fibres alimentaires végétales ;
- jusqu'à 1,2% d'acidifiant de type jus de citron concentré ;
- entre 50% et 75% d'eau.

4. Produit alimentaire végétal selon l'une quelconque des revendications précédentes, **caractérisé par** :
- une teneur en extrait sec comprise entre 20 et 50% ;
- une couleur blanche, un aspect lisse, une rhéologie tartinable, une texture lisse et un goût frais à fermenté/acide.

5. Produit alimentaire végétal selon l'une quelconque des revendications précédentes, **caractérisé en ce que** le fruit à coque est l'amande.

6. Produit alimentaire végétal selon l'une quelconque des revendications précédentes, **caractérisé en ce que** la matière grasse végétale est une huile végétale fluide.

7. Produit alimentaire végétal selon la revendication 6, **caractérisé en ce que** l'huile végétale fluide est choisie parmi l'huile de colza, de tournesol ou d'olive ou leur mélange.

8. Produit alimentaire végétal selon l'une quelconque des revendications précédentes, **caractérisé en ce que** la source d'amidon est une farine de riz et/ou une fécule de pomme de terre ou de manioc.

9. Produit alimentaire végétal selon la revendication 8, **caractérisé en ce que** la farine de riz est prégélatinisée.

10. Produit alimentaire végétal selon l'une quelconque des revendications précédentes, **caractérisé en ce que** les fibres alimentaires végétales sont choisies parmi les fibres solubles non texturantes telles que l'inuline, les fructooligosaccharides, et les dextrines résistantes et ou tout autre oligosaccharide indigestible de faible masse molaire, soluble et ayant un goût neutre.

11. Procédé de préparation du produit selon l'une quelconque des revendications 1 à 10, comprenant les étapes suivantes :
A) optionnellement, préparation d'une matière première végétale fermentée par fermentation d'une partie ou de la totalité de fruits à coque broyés, sous leur forme réhydratée et traité thermiquement préalablement à l'inoculation des ferments ;
B) mélange des matières premières, pouvant comprendre la matière première végétale fermentée obtenue à l'étape A), via un cisaillement énergique, et, optionnellement, préchauffage ;
C) traitement thermique du mélange à une température comprise entre 75 et 90°C pendant 1 à 10 minutes sous cisaillement énergique ;
D) dégazage optionnel et homogénéisation ;
E) optionnellement, foisonnement ;
F) optionnellement, ajout de matières premières de préférence végétales ;
les étapes E) et F) peuvent être inversées ;
G) dosage à chaud à une température supérieure à 70°C du produit fini dans son emballage ou dans un containeur intermédiaire ;
H) refroidissement entre 4 et 10°C ;
I) optionnellement dans le cas d'un dosage dans un containeur intermédiaire, ajout d'autres matières premières de préférence végétales aromatisantes et/ou de ferments puis dosage à froid du produit dans son emballage final.
